# EUROPÄISCHE PATENTSCHRIFT

(11) **EP 3 821 140 B1**
(45) Veröffentlichungstag und Bekanntmachung des Hinweises auf die Patenterteilung: **10.07.2024**
(21) Anmeldenummer: 19733659.7
(22) Anmeldetag: 14.05.2019
(51) Int. Cl.: F16B 7/18

(54) **KONSTRUKTIONSPROFIL**
STRUCTURAL PROFILE
PROFILÉ DE CONSTRUCTION

(30) Priorität: 24.05.2018 DE 202018002529 U
(43) Veröffentlichungstag der Anmeldung: 19.05.2021
(73) Patentinhaber: isel-automation GmbH & Co. KG, 36466 Dermbach (DE)
(72) Erfinder: ISERT, Hugo, 36466 Dermbach (DE)
(74) Vertreter: Weihrauch, Frank
(86) Internationale Anmeldenummer: PCT/DE2019/000131
(87) Internationale Veröffentlichungsnummer: WO 2019/223821

(56) Entgegenhaltungen:
- DE-A1- 3 211 404
- DE-U1- 20 207 435

## Beschreibung

Die Erfindung betrifft ein Konstruktionsprofil, insbesondere zum modularen Aufbau von Rahmenstrukturen.

Aus dem Stand der Technik sind Konstruktionsprofile mit unterschiedlichen Ausgestaltungen der Querschnittsfläche bekannt (siehe z. B. DE 202 07 435 U1).

Die Aufgabe der Erfindung ist es ein Konstruktionsprofil aufzuzeigen, welches eine Vielzahl von Möglichkeiten für die Konstruktion von Rahmenstrukturen bietet, in bestehende Rahmenstrukturen nachträglich einfügbar ist, für die Halterung von Flächenelementen geeigent ist und dabei einfach montierbar und demontierbar ist. Die Aufgabe wird durch die im Patentanspruch 1 aufgeführten Merkmale gelöst. Bevorzugte Weiterbildungen ergeben sich aus den Unteransprüchen.

Das Konstruktionsprofil weist erfindungsgemäß eine Außenkontur mit mindestens einer Längseite und mindestens einer Querseite auf, welche zueinander quer angeordnet sind. Vorzugsweise handelt es sich um eine rechteckige Außenkontur, so dass zusätzlich noch eine weitere Längsseite und eine weitere Querseite vorhanden sind. Möglich sind aber auch Ausbildungen bei denen die Außenkontur über die erfindungsgemäß mindestens eine Längsseite und mindestens eine Querseite hinaus eine oder mehrere gewölbte Wandungsabschnitte aufweist.

Erfindungsgemäß weist die mindestens eine Längsseite eine Längsseitennut und die mindestens eine Querseite eine Querseitenenut auf. Die Längsseitennut und die Querseitennut werden zusammengefasst auch als die Nuten bezeichnet.

Die Erfindung schließt es nicht aus, dass außer den erfindungsgemäßen Nuten noch weitere Nuten an dem Konstruktionsprofil vorhanden sind, welche gleiche oder auch abweichende Geometrien aufweisen können. Solche Nuten werden nachfolgend auch als sonstige Nuten bezeichnet.

Erfindungsgemäß weisen die beiden erfindungsgemäßen Nuten, also die Längsseitennut und die Querseitennut einen Zugang zu einer Stirnseite des Konstruktionsprofils auf. Dadurch wird an der Stirnseite eine Verbindung des Konstruktionsprofils mit einem Verbindungspartner wie beispielsweise einem weiteren erfindungsgemäßen Konstruktionsprofil oder mit einem anderen Konstruktionsprofil ermöglicht. Ein solcher Verbindungspartner wird nachfolgend auch als Tragprofil bezeichnet. Als Zugang wird verstanden, dass die Nuten bis an die Stirnseite herangeführt sind, so dass beispielsweise Profilverbinder oder andere Verbindungselemente stirnseitig axial, also in der Längsachse des Kontruktionsprofils, in die Nuten eingebracht werden können.

Vorzugsweise handelt es sich bei dem Konstruktionsprofil um ein Strangpressprofil, besonders vorzugsweise um ein Aluminiumstrangpressprofil. Hierbei werden bei einem Ablängen die Stirnseiten freigegeben.

Die Nuten weisen erfindungsgemäß einen Nutenquerschnitt auf, in welchen ein Kreis einbeschreibbar ist.

Dem erfindungsgemäßen Nutenquerschnitt liegt zu Grunde, dass es durch diesen Nutenquerschnitt ermöglicht wird, beispielsweise eine Ankerhülse, die einen runden Querschnitt aufweist, in den Nuten zu befestigen. Mögliche Ausführungen für eine Befestigung der Ankerhülsen sind vorzugsweise ein Einschrauben, aber auch ein Einpressen oder ein Verkleben. Als ein Nutenquerschnitt, in den ein Kreis einbeschreibbar ist, wird jeder Querschnitt verstanden, bei dem sich mindestens drei Berührungspunkte mit einem einbeschriebenen Kreis ergeben. Damit ist ein im Wesentlichen zylindrischer Körper wie beispielsweise eine Gewindeschraube in ihrer Lage in der Nut festlegbar. Die Berührungspunkte können durch Kanten oder Flächen in der Nut gebildet werden. Insbesondere ist es auch möglich, den Nutenquerschnitt teilkreisförmig auszubilden.

Die Längsmittelachsen der Nuten sind in einer gemeinsamen Nutenebene angeordnet. Die gemeinsame Nutenebene ist parallel zu einer Längsmittelebene des Konstruktionsprofils angeordnet. Soweit bei einer Montage in die Nuten stirnseitig Befestigungsmittel eingesetzt werden, liegen deren Mittelachsen somit auf einer Linie.

Besondere Vorteile der Erfindung ergeben sich insbesondere daraus, dass die Längsmittelachsen der Nuten in einer Ebene angeordnet sind und sich somit die Längsmittelachsen der Nuten in einer Linie befinden. Damit können alle Befestigungsmittel, die in die Nuten eingesetzt sind, in ein und dieselbe Nut eines Tragprofils eingreifen.

Je nach Anwendungsfall kann dadurch zum Einem die Quernut ohne Befestigungsmittel bleiben und damit frei bleiben, so dass diese für das Einsetzen eines Plattenmaterials verwendet werden kann. Zum Anderem bleiben bei diesem ersten Anwendungsfall die Längsnuten beim Einsetzen der Plattenmaterialien zugänglich und stehen für die Befestigungsmittel und für den Zugang zu den Befestigungsmitteln zur Verfügung, während bei Profilen nach dem Stand der Technik das Plattenmaterial ausgeklinkt werden muss, weil die Quernut mit Befestigungsmitteln belegt ist. Zudem besteht bei einer solchen Montagesituation nach dem Stand der Technik nach einem Einsetzen des Plattenmaterials in die Quernut kein Werkzeugzugang mehr zu dem Befestigungsmittel in der Quernut.

Das Konstruktionsprofil ermöglicht es in einem alternativen Anwendungsfall aber auch, stattdessen die Befestigungsmittel für eine Verbindung zu einem Tragprofil in die Quernut einzusetzen und so die Längsnut frei zu halten. Bei diesem zweiten Anwendungsfall steht die Längsnut für andere Montagezwecke uneingeschränkt zur Verfügung.

In einem dritten Anwendungsfall, bei dem eine hohe Torsionsbelastung des Konstruktionsprofils in Montagelage zu erwarten ist, ermöglicht das erfindungsgemäße Konstruktionsprofil es auch, Befestigungsmittel sowohl in der Längsnut als auch in der Quernut einzusetzen. Bei diesem Anwendungsfall können auf das Konstruktionsprofil wirkende Drehmomente zuverlässig über zwei in der Längsachse eines Tragprofils beabstandete Punkte auf das Tragprofil übertragen werden.

Werden Ankerhülsen in die Stirnseite des Konstruktionsprofils ohne Überstand eingesetzt, wird es ermöglicht, das Konstruktionsprofil in einen geschlossenen Rahmen von zwei Tragprofilen einzuschwenken. Es ist als besonderer Vorteil somit nicht erforderlich den Rahmen vorher umständlich zu öffnen um das Konstruktionsprofil positionieren zu können.

Weiterhin ist es durch das erfindungsgemäße Konstruktionsprofil vorteilhaft möglich, Ankerhülsen einzusetzen und so eine Verbindungslösung bereitzustellen, die nicht in die strukturelle Integrität des Konstruktionsprofils eingereift. Damit wird vorteilhaft eine sonst dafür erforderliche Bohr- oder Fräsbearbeitung eingespart und die weitere Verwendung des Konstruktionsprofils nicht eingeschränkt.

Zudem ist es vorteilhaft möglich, vor der Montage der Ankerhülsen Verbindungsschrauben mit einem Schraubenkopf einzulegen, dessen Größe die laterale Öffnung der Nut übersteigt. So eingebrachte Verbindungsschrauben können nicht herausfallen. Dies ist insbesondere vorteilhaft, wenn die Konstruktion oft umgebaut werden soll, wie beispielsweise bei Messeständen.

Ein weiterer Vorteil des Konstruktionsprofils besteht darin, dass es auch mit anderen handelsüblichen Konstruktionsprofilsystemen kombinierbar ist. Das erfindungsgemäße Konstruktionsprofil kann somit einerseits an handelsüblichen Konstruktionsprofilen befestigt werden. Umgekehrt können handelsübliche Konstruktionsprofile an dem erfindungsgemäßen Konstruktionsprofil befestigt werden.

Gemäß einer vorteilhaften Weiterbildung weist das Konstruktionsprofil mindestens zwei Längsnuten auf. Dabei sind gemäß dieser Weiterbildung beide Längsnuten in der Längsseite angeordnet.

Besonders vorteilhaft ist diese Weiterbildung für den Anwendungsfall, dass mit dem Konstruktionsprofil ein Plattenmaterial befestigt werden soll. In diesem Anwendungsfall wird die Quernut mit dem Plattenmaterial belegt. Die zweite Längsnut kann dann wie die erste Längsnut ein Befestigungsmittel aufnehmen und zwei Befestigungspunkte in einer Längsnut eines Tragprofils schaffen und so ein Verdrehen des Konstruktionsprofils nach dessen Montage an dem Tragprofil verhindern.

Besitzt das Konstruktionsprofil zwei Längsnuten, so können bei einer Ausbildung mit zwei gegenüberliegenden Quernuten bis zu vier Verbindungsstellen zu einer Längsnut eines Tragprofils zur Befestigung genutzt werden.

Werden dagegen ausschließlich die beiden Längsnuten zur Befestigung in der Längsnut eines Tragprofils genutzt, bleiben die beiden Quernuten frei, wodurch Plattenmaterial an beiden Querseiten eingesetzt werden kann. Es können so vorteilhaft besonders große flächenbildende Umhausungen erstellt werden.

Im Stand der Technik sind dagegen die Nuten nach dem Verbinden mit einem Tragprofil durch die Befestigungsmittel zumindest stirnseitennah blockiert, so dass das Plattenmaterial an seinen Ecken ausgeklinkt werden muss. Werden die ausgeklinkten Platten eingesetzt, blockieren sie nun ihreseits den Zugang zu den Verbindungselementen. Wenn mindestens zwei Längsnuten vorhanden sind, kann eine besonders verdrehsichere Verbindung zu einem Tragprofil erreicht werden und es stehen trotzdem die Quernut oder die Quernuten des Profils für das Einsetzen eines Plattenmaterials zur Verfügung.

Das Konstruktionsprofil weist erfindungsgemäß einen Längsnutenquerschnitt mit einem oberen und einem unteren Abschnitt auf.

In dem unteren Abschnitt ist ein Kreis einbeschreibbar. Der obere Abschnitt ist als T-Nut ausgebildet.

In den bekannten Konstruktionsprofilen nach dem Stand der Technik existieren meistens Längsnuten und eine Bohrung in der Mitte des Querschnittes.

Bei der vorliegenden Weiterbildung des erfindungsgemäßen Konstruktionsprofils liegt ein seitlicher Zugang zu dem unteren Abschnitt vor, der vorzugsweise als seitlich geöffnete Mittelbohrung ausgebildet ist. Durch den seitlichen Zugang zu dem unteren Abschnitt, der durch den oberen Abschnitt hindurch vorliegt, ist es möglich auch den unteren Abschnitt für eine Befestigung an einem Tragprofil zu benutzen. Der untere Abschnitt besitzt bevorzugt einen runden Querschnitt mit einem erhöhten Durchmesser und kann so größere Schrauben größeren Durchmessers als der obere Abschnitt aufnehmen. Insbesondere ist der untere Abschnitt vorzugsweise so ausgebildet, dass dieser Befestigungsmittel mit Schrauben der Größe 8 mm aufnehmen kann. Dies führt zur Erhöhung der Festigkeit der Konstruktion, da höhere Biege- und Torsionsmomente aufgenommen werden können.

Durch das Einsetzen von zusätzlichen Befestigungsmitteln in den oberen Abschnitt ist eine weitere Stabilisierung des Konstruktionsprofils bei einem stirnseitigen Verbinden mit einem Tragprofil möglich. Dies kann erstens erfolgen, wenn das Konstruktionsprofil so angeordnet ist, dass die Längsmittelachsen des oberen und des unteren Abschnitts entlang einer Längsnut des Tragprofils angeordnet sind. Dies kann zweitens erfolgen, wenn bei einer Querausrichtung der Längsmittelachsen des oberen und des unteren Abschnitts das Tragprofil zwei Befestigungspunkte, insbesondere durch zwei Längsnuten, aufweist, wobei die zwei Längsnuten des Tragprofils dann einen Abstand aufweisen, der dem Abstand der Längsmittelachsen des oberen und des unteren Abschnitts entspricht.

Der obere Abschitt lässt zudem auch Befestigungen von anderen Montagepartnern zu, auch wenn der untere Abschnitt mit Befestigungsmitteln belegt ist.

Durch die Ausbildung des oberen Abschnitts als T-Nut können insbesondere Hammerkopfschrauben oder Nutensteine als Befestigungsmittel verwandt werden.

Gemäß einer vorteilhaften Weiterbildung weist mindestens eine Nut zwei planparallel gegenüberliegende Nutenwandungen auf, wobei jede der Nutenwandungen mindestens zwei, lateral beabstandete, Flächenabschnitte aufweist.

Als lateral beabstandet wird es verstanden, dass der eine Flächenabschnitt näher am Nutengrund liegt als der andere. Der Abstand der Nutenwandungen zueinander wird nachfolgend auch als Maulweite bezeichnet.

Die zwei, lateral beabstandeten, Flächenabschnitte einer Nutenwandung liegen zudem auf einer gemeinsamen Planebene.

Ein besonderer Vorteil liegt dann vor, wenn von der Nut Plattenmaterial mit einer Materialstärke aufgenommen wird, die der Maulweite entspricht. Es liegen dann an jeder Nutenwandung in jeder Schnittebene mehrere Haltepunkte vor, welche das Plattenmaterial im Sinne der Eulerschen Knickfälle besser einspannen und eine zusätzlich Stabilisierung des Plattenmaterials bewirken.

Es ergibt sich so ein Querschnitt der Nuten, welcher zudem sehr vorteilhaft für das Einlegen von flachen Bändern ist. So lassen sich beispielsweise LED- oder Magnetstreifen einlegen.

Gemäß einer vorteilhaften Weiterbildung weist ein einbeschriebener Kreis vier Berührungspunkte zu den Nutenwandungen und mindestens einen Berührungspunkt zu einem Nutengrund auf.

In herkömmlichen T-Nuten von Konstruktionsprofilen werden regelmäßig nur drei Berührungspunkte erreicht.

Da ein Befestigungsmittel, wie beispielsweise eine Ankerhülse, einen runden Querschnitt besitzt, der vorzugsweise dem einbeschriebenen Kreis entspricht, arbeitet sich das Gewinde an fünf statt drei Punkten in das Material des Konstruktionsprofil und wird dadurch auch stärker verankert.

Die Erfindung wird als Ausführungsbeispiel anhand von
- Fig. 1: Querschnitt Konstruktionsprofil (flach)
- Fig. 2: Querschnitt Konstruktionsprofil (mittel)
- Fig.°3: Querschnitt Konstruktionsprofil (hoch)
- Fig.°4: Querschnitt Konstruktionsprofil (quer montiert)
- Fig.°5: Explosionsansicht
- Fig.°6: Detailansicht Querschnitt einbeschriebenen Kreisen
- Fig.°7: Detailansicht Querschnitt mit eingesetztem Plattenmaterial
näher erläutert, wobei das Ausführungsbeispiel gemäß Fig. 1 nicht unter den Wortlaut des Anspruchs 1 fällt.

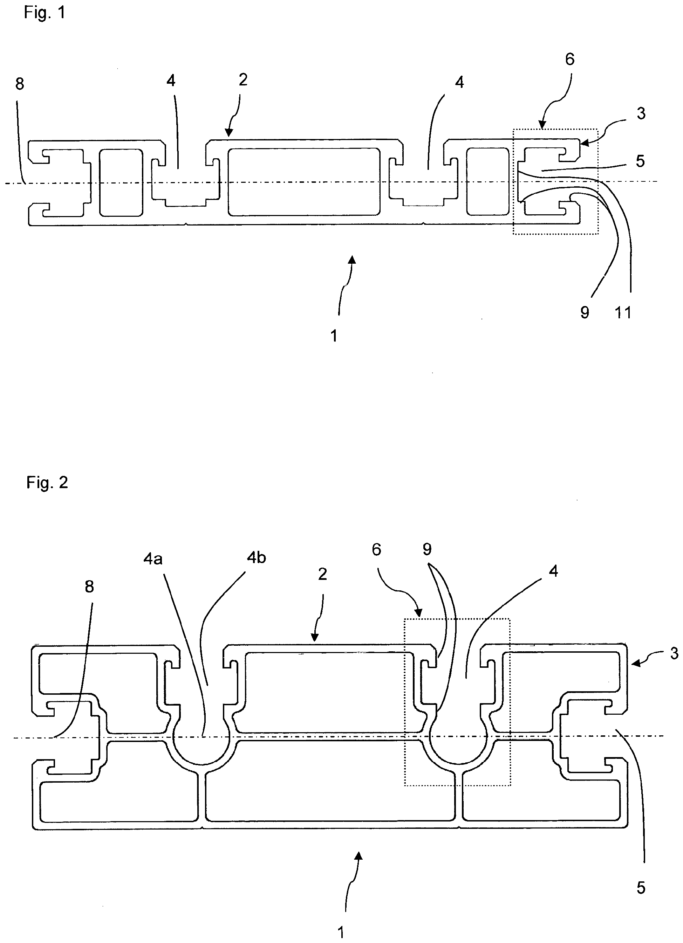

In Fig. 1 ist ein Querschnitt eines ersten Ausführungsbeispiels des Konstruktionsprofils in einem flachen Ausführungsbeispiel dargestellt, in welchem die Außenkontur 1 eine Längsseite 2 mit einer Längsnut 4 und eine Querseite 3 mit einer Quernut 5 aufweist. Wie in Fig. 1 ersichtlich und durch die gestrichelte Linie dargestellt, befinden sich die Längsmittelachsen der Nuten 4, 5 in einer einheitlichen Nutenebene, die der Längsmittelebene 8 des Konstruktionsprofils entspricht. In diesem Ausführungsbeispiel weist die Längsseite 2 zusätzlich noch eine weitere Längsnut 4 auf. Ferner weist in diesem Ausführungsbeispiel die Außenkontur 1 eine weitere Querseite mit einer weiteren Quernut (in Fig. 1 ohne Bezugszeichen) auf.

Der Nutenquerschnitt 6 ist in den Figuren teilweise hervorgehoben durch eine eckige Umfassung in gestrichelter Linie. Der Nutenquerschnitt 6 sowohl der Längsnuten als auch der Quernuten 5 weist in diesem Ausführungsbeispiel einen flachen Nutengrund 11 und beabstandete Flächenabschnitte 9 auf. In dem ersten Ausführungsbeispiel weisen alle Nuten 4, 5 den gleichen Nutenquerschnitt 6 mit Nutengrund 11 und beabstandeten Flächenabschnitten 9 auf; gleichwohl ist aus Gründen der Übersichtlichkeit ausschließlich die Quernut 5 mit den Bezugszeichen 6, 9 und 11 versehen.

Die Fig. 2 zeigt einen Querschnitt eines zweiten Ausführungsbeispiels. Es handelt sich um eine Ausführung mit mittlerer Profilhöhe. Der Nutenquerschnitt 6 weist hier einen oberen Abschnitt 4b und einen unteren Abschnitt 4a auf.

Der obere Abschnitt 4b ist im Querschnitt rechteckig gestaltet und weist zusätzlich eine T-Nut auf. Der untere Abschnitt 4a ist mit dem oberen Abschnitt verbunden und ist im Querschnitt rund gestaltet. Die Quernut 5 liegt mit ihrer Längsmittelachse mit der Längsmittelachse des unteren Abschnitts 4a auf der Längsmittelebene 8. Ergänzend gelten für Fig. 2 die Beschreibungen zu Fig. 1 in entsprechender Weise.

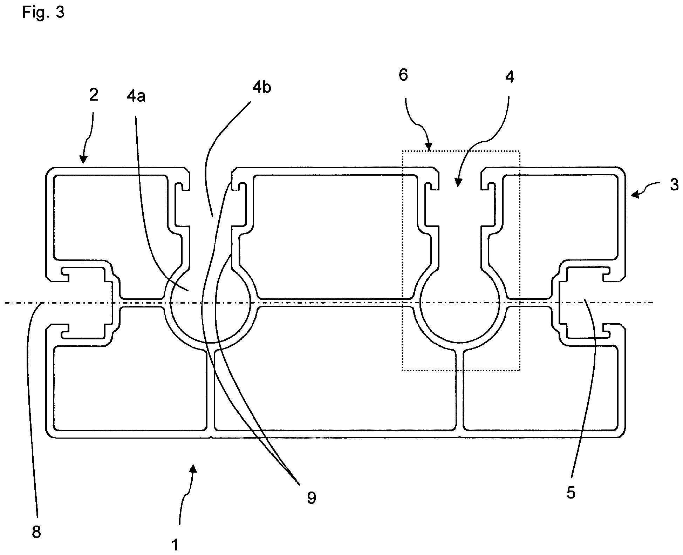

Die Fig. 3 zeigt einen Querschnitt eines dritten Ausführungsbeispiels. Es handelt sich um eine Ausführung mit einer großen Profilhöhe. Der untere Abschnitt 4a ist wie in der Ausführung des zweiten Ausführungsbeispiels mit mittlerer Profilhöhe mit dem oberen Abschnitt 4b der Längsnut 4 verbunden. Die Längsmittelebene 8 des unteren Abschnitts 4a liegt mit den Längsmittelachsen 8 der Quernuten 5 in einer Ebene. Der untere Flächenabschnitt der beabstandete Flächenabschnitte 9 ist gegenüber den Ausführungsbeispielen nach Fig. 1 und nach Fig. 2 in Richtung des unteren Abschnitts 4a verlängert. Der Durchmesser des unteren Abschnitts 4a ist im Vergleich zum zweiten Ausführungsbeispiel vergrößert, so dass im unteren Abschnitt 4a gemäß Fig. 3 Befestigungsmittel mit der Schraubengröße M8 eingesetzt werden können. Im Übrigen besteht im Wesentlichen die gleiche Geometrie des Querschnitts im Vergleich zum zweiten Ausführungsbeispiel. Ergänzend gelten auf für Fig. 3 die Beschreibungen zu Fig. 1 in entsprechender Weise.

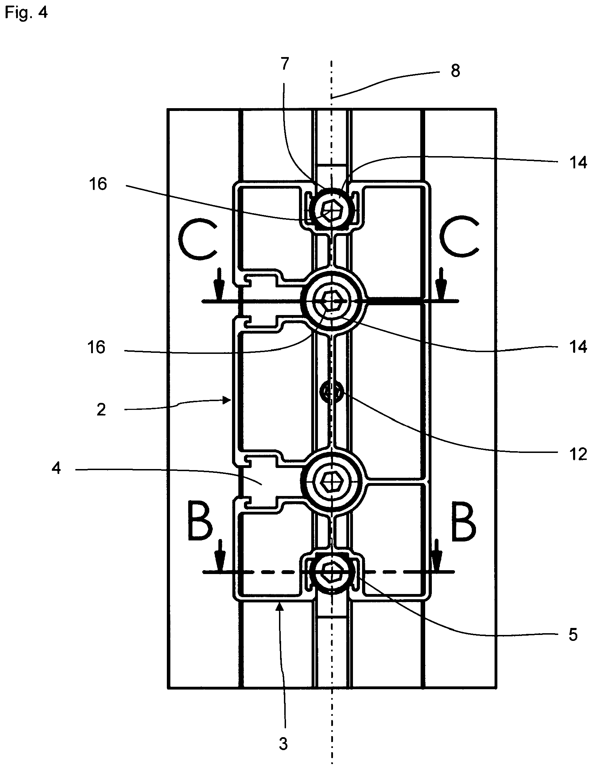

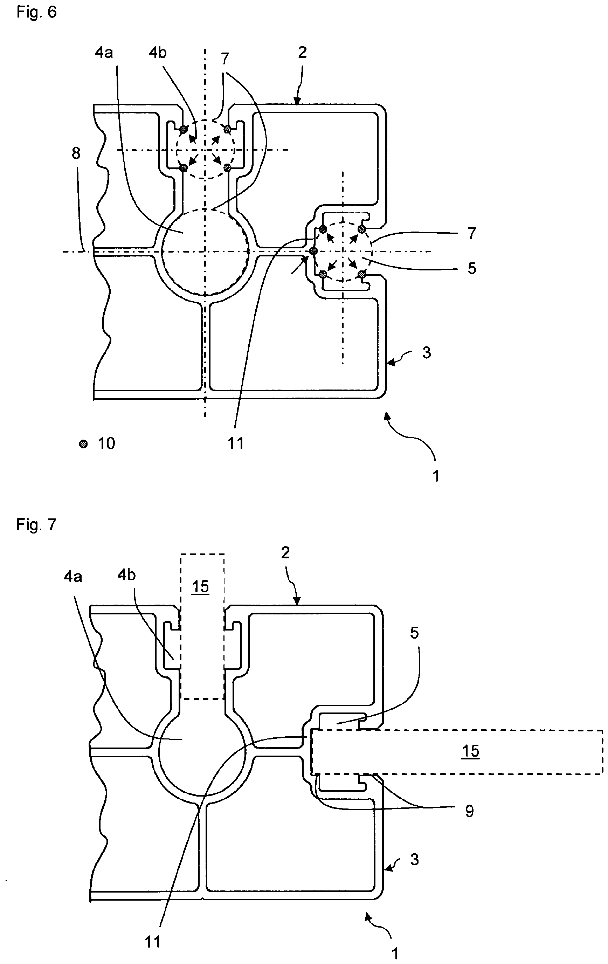

Die Fig. 4 zeigt einen Querschnitt eines Konstruktionsprofils, welches mit der Stirnseite an einer Längsseite eines Tragprofils montiert ist. Das Konstruktionsprofil entspricht dem dritten Ausführungsbeispiel gemäß Fig. 3. Die Befestigung erfolgt in dieser Ausführung über vier Schrauben 16 in vier Ankerhülsen 14. Der Gewindeaußendurchmesser der Ankerhülsen entspricht hierbei jeweils dem einbeschreibbaren Kreis 7. Da der Durchmesser der unteren Abschnitte 4a vergrößert ist, weisen auch die Ankerhülsen 14 und die Schrauben 16 in den unteren Abschnitten 4a der Längsnuten 4 einen größeren Durchmesser auf als die Ankerhülsen 14 und die Schrauben 16 in den Quernuten 5. In der Quernuten 5 werden im Querschnitt jeweils fünf Berührungspunkte 10, welche in Fig. 6 näher dargestellt sind, erzeugt. Fig. 4 zeigt insbesondere, dass durch die erfindungsgemäße Anordnung der Längsmittelachsen der Nuten 4, 5 in der Längsmittelebene 8 des Konstruktionsprofils die Schauben 16 aller Nuten 4, 5 in ein und dieselbe Längsnut des Tragprofils eingreifen können.

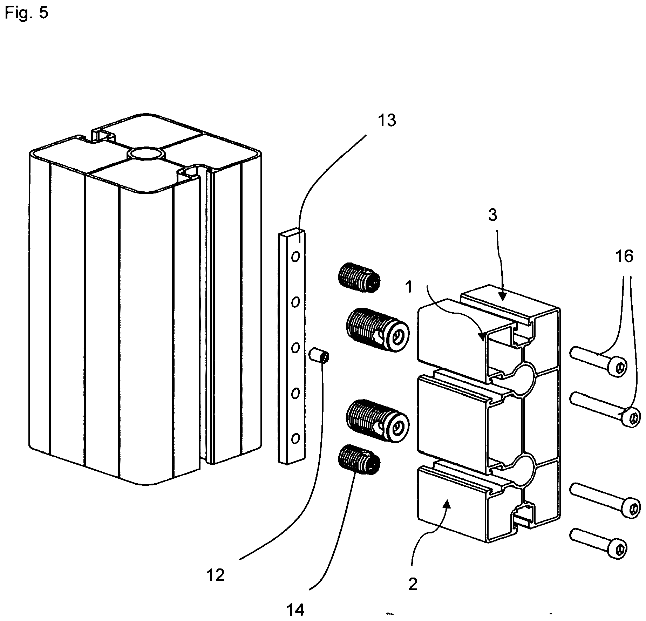

Fig. 5 ist eine isometrische Explosionsansicht eines montierten Konstruktionsprofils gemäß Fig. 4. Die vier Ankerhülsen 14 werden in dem Konstruktionsprofil stirnseitig ohne Überstand eingeschraubt und mit Schrauben 16 am Profilanker 13 befestigt, welcher zuvor in einer Längsnut eines weiteren Konstruktionsprofils, hier bezeichnet als Tragspofile, eingesetzt wird. Ein Fixierstift 12 erleichtert die Montage des Konstruktionsprofils, indem der Profilanker 13 gegenüber dem Nutengrund der Längsnut des Tragprofils abgedrückt wird und so während der Montage nicht mehr längs der Längsnut verrutschen kann.

Durch die Konstruktion lassen sich Querstreben auch in bereits bestehende Rahmen mit einem festen Abstand von zwei Tragprofilen einschwenken, wobei hierbei der Rahmen nicht geöffnet werden muss.

Fig. 6 ist eine Detailansicht des Querschnittes, in welcher die Kreise 7 einbeschrieben sind, insbesondere um die Berührungspunkte 10 darzustellen. Die Berührungspunkte 10 sind zur Verdeutlichung hier zeichnerisch besonders dargestellt sowie durch jeweils eine Pfleil hervorgehoben. Der Durchmesser der einbeschriebenen Kreise 7 entspricht ungefähr dem Innengewindedurchmesser der Ankerhülsen. Die Berührungspunkte 10 zeigen die Stellen, an denen sich das Gewinde der Ankerhülsen 14 in das Material des Konstruktionsprofils arbeitet.

In diesem Ausführungsbeispiel ist das Konstruktionsprofil so ausgebildet, dass sich in der Quernut 5 und im oberen Abschnitt 4b der Längsnut 4 vier Berührungspunkte 10 zu den Nutenwandungen ausbilden. Zusätzlich bildet sich in der Quernut 5 ein weiterer Berührungspunkt 10 zu dem Nutengrund 11 aus. Die hohe Anzahl der Berührungspunkte 10 bieten eine festere Verankerung der Ankerhülsen 14 nach dem Einschrauben, da die Kraft auf fünf in großen Winkelabständen angeordnete Berührungspunkte verteilt wird. Der untere Abschnitt 4a der Längsnut 4, welcher einer Mittelbohrung entspricht, ermöglicht sogar das Nutzen von über dreiviertel des Umfangs eines einbeschriebenen Kreises 7 als Berührungsfläche zur Verankerung der Ankerhülsen 14. Somit ist zum einen die Verankerung sehr stabil und zum anderen ist es durch den größeren Durchmesser möglich, stabilere Schrauben 16 zu verwenden.

Fig. 7 ist eine Detailansicht des Querschnitts des Konstruktionsprofils, in welcher Verkleidungsplatten 15 in die Längs- 4 und Quernut 5 der Außenkontur eingelegt wurden. Die beabstandeten Flächenabschnitten 9 sind jeweils in einer gemeinsamen Planebene angeordnet und die Planebenen der sich in einer Nut gegenüberliegenden beabstandeten Flächenabschnitten 9 sind parallel zu einander. So ist der Abstand zwischen den sich in einer Nut gegenüberliegenden beabstandeten Flächenabschnitten 9 auch konstant. So kann das Plattenmaterial in die Nuten formschlüssig eingeschoben werden und wird, im Sinne der eulerischen Knickfälle, eingespannt und gegen Ausknickung stabilisiert.

### Verwendete Bezugszeichen

- 1: Außenkontur
- 2: Längsseite
- 3: Querseite
- 4: Längsseitennut
- 4a: unterer Abschnitt
- 4b: oberer Abschnitt
- 5: Querseitennut
- 6: Nutenquerschnitt
- 7: einbeschreibbarer Kreis
- 8: Längsmittelebene
- 9: beabstandete Flächenabschnitte
- 10: Berührungspunkte
- 11: Nutengrund
- 12: Fixierstift
- 13: Profilanker
- 14: Ankerhülse
- 15: Plattenmaterial
- 16: Schrauben

## Patentansprüche

1. Konstruktionsprofil,
aufweisend,
eine Außenkontur (1), wobei die Außenkontur (1) mindestens eine Längsseite (2) und eine Querseite (3) aufweist und wobei die Längsseite (2) und die Querseite (3) zueinander quer angeordnet sind,
wobei die Längsseite (2) eine Längsseitennut (4) und die Querseite (3) eine Querseitennut (5) aufweist,
wobei die Nuten (4, 5) einen Nutenquerschnitt (6) aufweisen, in welchem ein Kreis (7) einbeschreibbar ist,
wobei die Längsmittelachsen der Nuten (4, 5) in einer gemeinsamen Nutenebene angeordnet sind und wobei die Nutenebene parallel zu einer Längsmittelebene (8) des Konstruktionsprofils angeordnet ist,
**dadurch gekennzeichnet,**
**dass** der Nutenquerschnitt (6) der mindestens einen Längsseitennut (4) einen unteren Abschnitt (4a) und einen oberen Abschnitt (4b) aufweist, und dass der untere Abschnitt (4a) teilkreisförmig und der obere Abschnitt (4b) als T-Nut ausgebildet ist sowie
**dass** die Längsmittelachse der mindestens einen Längsseitennut (4) durch die Längsmittelachse des unteren Abschnitts (4a) definiert wird.

2. Konstruktionsprofil nach Anspruch 1,
**dadurch gekennzeichnet,**
**dass** die Längsseite (2) mindestens zwei Längsnuten (4) aufweist.

3. Konstruktionsprofil nach einem der vorangegangenen Ansprüche,
**dadurch gekennzeichnet,**
**dass** mindestens eine der Nuten (4, 5) zwei planparallel gegenüberliegende Nutenwandungen aufweist,
wobei jede Nutenwandung mindestens zwei beabstandete Flächenabschnitte (9) aufweist,
wobei die zwei beabstandeten Flächenabschnitte (9) einer Nutenwandung in einer gemeinsamen Planebene angeordnet sind.

4. Konstruktionsprofil nach Anspruch 3,
**dadurch gekennzeichnet,**
**dass** die mindestens eine der Nuten (4, 5) einen Nutengrund (11) aufweist und ein einbeschreibbarer Kreis (7) mindestens vier Berührungspunkte (10) zu den Nutenwandungen und mindestens einen Berührungspunkt zu dem Nutengrund (11) aufweist.

## Claims

1. A construction profile,
comprising,
an outer contour (1), wherein the outer contour (1) has at least one longitudinal side (2) and one transverse side (3), and wherein the longitudinal side (2) and the transverse side (3) are arranged transversely to each other, wherein the longitudinal side (2) comprises a longitudinal side groove (4) and the transverse side (3) comprises a transverse side groove (5),
wherein the grooves (4, 5) have a groove cross section (6) in which a circle (7) can be inscribed,
wherein the longitudinal centre axes of the grooves (4, 5) are arranged in a common groove plane, and wherein the groove plane is arranged parallel to a longitudinal centre plane (8) of the construction profile, **characterized in**
**that** the groove cross-section (6) of the at least one longitudinal side groove (4) comprises a lower section (4a) and an upper section (4b), and in that the lower section (4a) is designed as a pitch circle and the upper section (4b) is designed as a T-groove, and
in that the longitudinal centre axis of the at least one longitudinal side groove (4) is defined by the longitudinal centre axis of the lower section (4a).

2. The construction profile according to claim 1,
**characterized in**
**that** the longitudinal side (2) has at least two longitudinal grooves (4).

3. The construction profile according to one of the preceding claims,
**characterized in**
**that** at least one of the grooves (4, 5) has two plane-parallel opposing groove walls,
wherein each groove wall has at least two spaced surface sections (9),
wherein the two spaced surface sections (9) of a groove wall are arranged on a common planar level.

4. The construction profile according to claim 3,
**characterized in**
**that** the at least one of the grooves (4, 5) has a groove base (11), and an inscribable circle (7) has at least four points of contact (10) with the groove walls and at least one point of contact with the groove base (11).

## Revendications

1. Profilé de construction,
présentant
un contour extérieur (1), le contour extérieur (1) comportant au moins un côté longitudinal (2) et un côté transversal (3), et le côté longitudinal (2) et le côté transversal (3) étant disposés transversalement l'un par rapport à l'autre,
le côté longitudinal (2) présentant une rainure de côté longitudinal (4) et le côté transversal (3) présentant une rainure de côté transversal (5), les rainures (4, 5) présentant une section transversale de rainure (6) dans laquelle un cercle (7) peut être inscrit,
les axes médians longitudinaux des rainures (4, 5) étant disposés dans un plan de rainure commun et le plan de rainure étant disposé parallèlement à un plan médian longitudinal (8) du profilé de construction,
est **caractérisée en ce**
**que** la section transversale de rainure (6) de la au moins une rainure latérale longitudinale (4) présente une section inférieure (4a) et une section supérieure (4b), et en ce que la section inférieure (4a) est réalisée en forme de cercle partiel et la section supérieure (4b) en forme de rainure en T, ainsi que
**que** l'axe médian longitudinal de la au moins une rainure latérale longitudinale (4) est défini par l'axe médian longitudinal de la section inférieure (4a).

2. Profilé de construction selon la revendication 1
est **caractérisé en ce**
**que** le côté longitudinal (2) présente au moins deux rainures longitudinales (4).

3. Profilé de construction selon l'une des revendications précédentes,
**caractérisé en ce**
**qu'**au moins l'une des rainures (4, 5) présente deux parois de rainure opposées à faces planes et parallèles,
chaque paroi de rainure présentant au moins deux sections de surface (9) espacées,
les deux sections de surface (9) espacées d'une paroi de rainure étant disposées dans un plan commun.

4. Profilé de construction selon la revendication 3
est **caractérisé en ce**
**que** la au moins une des rainures (4, 5) présente un fond de rainure (11) et un cercle (7) pouvant être inscrit présente au moins quatre points de contact (10) avec les parois de la rainure et au moins un point de contact avec le fond de rainure (11).
